# EUROPEAN PATENT SPECIFICATION

(11) **EP 2 998 360 B1**
(45) Date of publication and mention of the grant of the patent: **08.05.2019**
(21) Application number: 14797313.5
(22) Date of filing: 26.03.2014
(51) Int. Cl.: C08L 83/06, C08K 3/36, C08K 5/09, C08L 83/05, C08L 83/08

(54) **CURABLE SILICONE EMULSION COMPOSITION**
HÄRTBARE SILIKONEMULSIONSZUSAMMENSETZUNG
COMPOSITION D'ÉMULSION DE SILICONE DURCISSABLE

(30) Priority: 15.05.2013 JP 2013102775
(43) Date of publication of application: 23.03.2016
(73) Proprietor: Shin-Etsu Chemical Co., Ltd., Tokyo 100-0004 (JP)
(72) Inventor: HIRAI Motohiko, Annaka-shi Gunma 379-0224 (JP)
(74) Representative: Mewburn Ellis LLP
(86) International application number: PCT/JP2014/058582
(87) International publication number: WO 2014/185158

(56) References cited:
- EP-A1- 2 584 013
- JP-A- H0 885 760
- JP-A- 2003 119 387
- JP-A- 2005 296 697
- JP-A- 2006 159 554
- JP-A- 2007 284 607
- JP-A- 2008 095 002
- JP-A- 2008 231 276
- US-A1- 2003 069 379
- US-A1- 2011 009 558

## Description

### TECHNICAL FIELD

This invention relates to a curable silicone emulsion composition, and more particularly to a curable silicone emulsion composition which contains no organotin compounds as curing catalyst.

### BACKGROUND ART

Curable silicone emulsion compositions of various formulations are well known in the art as forming rubber films.

For example, JP-A S56-16553 (Patent Document 1) discloses a silicone emulsion composition comprising an anionically stabilized hydroxylated diorganopolysiloxane, colloidal silica, and an organotin compound or organic amine compound, the composition being at pH 9 to 11.5. USP 3,817,894 (Patent Document 2) discloses a silicone latex composition comprising a siloxane block copolymer consisting of dimethylsiloxane units and monophenylsiloxane units, water, a cationic surfactant, a filler, and an aminosilane. JP-A H08-85760 (Patent Document 3) discloses a silicone emulsion composition comprising a hydroxyl-containing organopolysiloxane, an SiH-containing organopolysiloxane, colloidal silica, an amide and carboxyl-containing silane, an epoxy-containing silane, and a curing catalyst. JP-A H09-208826 (Patent Document 4) discloses a silicone emulsion composition comprising an alkenyl-containing organopolysiloxane, an SiH-containing organopolysiloxane, colloidal silica, the reaction product of an aminosilane with an acid anhydride, an epoxysilane, and an addition reaction catalyst. JP-A H09-208900 (Patent Document 5) discloses a silicone emulsion composition comprising a hydroxyl end-blocked hydrogensiloxane, an emulsifier, water, and a curing catalyst. JP-A H09-208901, JP-A H09-208902 and JP-A H09-208903 (Patent Documents 6 to 8) disclose silicone emulsion compositions comprising a colloidal silica-silicone core shell material, a curing catalyst, an emulsifier, and water. JP-A 2002-363494 (Patent Document 9) discloses a silicone emulsion composition comprising a hydroxyl-containing organopolysiloxane, colloidal silica, an amide and carboxyl-containing silane, an epoxy-containing silane, a curing catalyst, and a photocatalytic oxide. JP-A 2008-231276 (Patent Document 10) discloses a silicone emulsion composition comprising a hydroxyl-containing organopolysiloxane, colloidal silica, an amide and carboxyl-containing silane, and an epoxy-containing silane. US 2003/069379 (Patent Document 11) discloses a room temperature curing organopolysiloxane composition including (A) an organopolysiloxane with at least two hydroxyl grounds bonded to silicon atoms within a single molecule, (B) an organosilicon compound represented by formula RₐSiX₄₋ₐ, and/or a partial hydrolysis condensate thereof, (wherein R is a substituted or unsubstituted monovalent hydrocarbon of 1 to 10 carbon atoms, X represents a hydrolysable group, and represents an integer of 0 to 3), and (C) a bismuth compound-based curing catalyst.

Organotin compounds are commonly used as the curing catalyst in these compositions. However, the use of organotin compounds is now limited or regulated depending on applications, fields, and countries because of their toxicity. There is a need for replacement of dibutyltin compounds by octyltin compounds, and further replacement of octyltin compounds by inorganic tin compounds or other metal compounds.

### PRIOR ART DOCUMENTS

### PATENT DOCUMENTS

Patent Document 1: JP-A S56-16553
Patent Document 2: USP 3,817,894
Patent Document 3: JP-A H08-85760
Patent Document 4: JP-A H09-208826
Patent Document 5: JP-A H09-208900
Patent Document 6: JP-A H09-208901
Patent Document 7: JP-A H09-208902
Patent Document 8: JP-A H09-208903
Patent Document 9: JP-A 2002-363494
Patent Document 10: JP-A 2008-231276
Patent Document 11: US 2003/069379

### SUMMARY OF THE INVENTION

### PROBLEMS TO BE SOLVED BY THE INVENTION

An object of the invention, which has been made in view of the problems in the prior art, is to provide a curable silicone emulsion composition which exhibits comparable curability without resorting to the curing catalysts of organotin compounds and may cure into a film having comparable physical properties including hardness, tensile strength and elongation.

### MEANS FOR SOLVING THE PROBLEMS

Making investigations, with the aim of solving the outstanding problems, whether or not various metal compounds other than organotin compounds are effective for curing, the inventor has found that bismuth compounds have catalysis. The invention is predicated on this finding.

[1] A curable silicone emulsion composition comprising
   (A) 100 parts by weight of an organopolysiloxane containing at least two silicon-bonded hydroxyl groups per molecule,
   (B) 0.01 to 5 parts by weight of an organohydrogenpolysiloxane containing at least two silicon-bonded hydrogen atoms per molecule,
   (C) 1 to 10 parts by weight of a reaction product of an amino-containing organoalkoxysilane with an acid anhydride,
   (D) 0.1 to 10 parts by weight of an epoxy-containing organoalkoxysilane and/or partial hydrolytic condensate thereof,
   (E) 0.5 to 50 parts by weight of colloidal silica,
   (F) 0.1 to 10 parts by weight of a bismuth compound, and
   (G) 50 to 500 parts by weight of water.
[2] The curable silicone emulsion composition of [1] wherein the organopolysiloxane (A) has the general formula (1):

   X₃SiO-(R₂SiO)ₐ-(Y₂SiO)_{b}-SiX₃ (1)

   wherein R which may be the same or different is a substituted or unsubstituted C₁-C₂₀ alkyl group or C₆-C₂₀ aryl group, X which may be the same or different is a substituted or unsubstituted C₁-C₂₀ alkyl group, C₆-C₂₀ aryl group, C₁-C₂₀ alkoxy group or hydroxyl group, Y which may be the same or different is X or -(O-X₂Si)_{c}-X, a is an integer of 10 to 10,000, b is an integer of 0 to 1,000, and c is an integer of 0 to 1,000, with the proviso that X, Y, b and c are selected such that at least two silicon-bonded hydroxyl groups are contained per molecule.
[3] The curable silicone emulsion composition of [1] or [2] wherein the organopolysiloxane (A) is used in the form of an oil-in-water type emulsion having a solid concentration of 20 to 80% by weight.
[4] The curable silicone emulsion composition of any one of [1] to [3] wherein the organohydrogenpolysiloxane (B) has the general formula (2):

   Z-(R₂SiO)_{d}-(RHSiO)ₑ-R₂Si-Z (2)

   wherein R which may be the same or different is a substituted or unsubstituted C₁-C₂₀ alkyl group or C₆-C₂₀ aryl group, Z is hydrogen or R, d is an integer of 1 to 1,000, and e is an integer of 0 to 1,000, Z is hydrogen when e=0, and at least one Z is hydrogen when e=1.
[5] The curable silicone emulsion composition of any one of [1] to [4] wherein component (C) is a reaction product of an amino-containing organoalkoxysilane having the general formula (3):

   ASiR_{g}(OR)_{3-g} (3)

   wherein R which may be the same or different is a substituted or unsubstituted C₁-C₂₀ alkyl group or C₆-C₂₀ aryl group, A is an amino-containing group of the formula: -R¹(NHR¹)ₕNHR² wherein R¹ which may be the same or different is a C₁-C₆ divalent hydrocarbon group, R² is R or hydrogen, and h is an integer of 0 to 6, and g is 0, 1 or 2, with an acid anhydride selected from the group consisting of maleic anhydride, phthalic anhydride, succinic anhydride, methylsuccinic anhydride, glutaric anhydride, and itaconic anhydride.
[6] The curable silicone emulsion composition of any one of [1] to [5] wherein component (F) is a straight or branched carboxylate of trivalent bismuth.
[7] The curable silicone emulsion composition of any one of [1] to [5] wherein component (F) has the general formula (4):

   (R³CO₂)(R⁴CO₂)(R⁵CO₂)Bi (4)

   wherein R³, R⁴ and R⁵ which may be the same or different are substituted or unsubstituted C₁-C₂₀ monovalent hydrocarbon groups.

### ADVANTAGEOUS EFFECTS OF THE INVENTION

The curable silicone emulsion composition comprising a bismuth compound as curing catalyst exhibits comparable curability to organotin compounds and cures into a film having comparable physical properties including hardness, tensile strength and elongation.

### EMBODIMENT FOR CARRYING OUT THE INVENTION

Now the invention is described in detail.

The curable silicone emulsion composition of the invention is characterized by comprising
(A) an organopolysiloxane containing at least two silicon-bonded hydroxyl groups per molecule,
(B) an organohydrogenpolysiloxane containing at least two silicon-bonded hydrogen atoms per molecule,
(C) a reaction product of an amino-containing organoalkoxysilane with an acid anhydride,
(D) an epoxy-containing organoalkoxysilane and/or partial hydrolytic condensate thereof,
(E) colloidal silica,
(F) a bismuth compound, and
(G) water, the composition being free of organotin compounds.

Component (A) is an organopolysiloxane having at least two silicon-bonded hydroxyl groups per molecule. The preferred organopolysiloxane has the general formula (1).

X₃SiO-(R₂SiO)ₐ-(Y₂SiO)_{b}-SiX₃ (1)

Herein R which may be the same or different is a substituted or unsubstituted C₁-C₂₀ alkyl group or C₆-C₂₀ aryl group; X which may be the same or different is a substituted or unsubstituted C₁-C₂₀ alkyl group, C₆-C₂₀ aryl group, C₁-C₂₀ alkoxy group or hydroxyl group; Y which may be the same or different is X or -(O-X₂Si)_{c}-X; a is an integer of 10 to 10,000, b is an integer of 0 to 1,000, and c is an integer of 0 to 1,000, with the proviso that X, Y, b and c are selected such that at least two silicon-bonded hydroxyl groups are contained per molecule.

R which may be the same or different is a substituted or unsubstituted C₁-C₂₀ alkyl group or C₆-C₂₀ aryl group, examples of which include methyl, ethyl, propyl, butyl, pentyl, hexyl, heptyl, octyl, nonyl, decyl, dodecyl, tetradecyl, hexadecyl, octadecyl; cyclopentyl, cyclohexyl, cycloheptyl; phenyl, tolyl, and naphthyl; or substituted forms of the foregoing groups in which some or all hydrogen atoms are substituted by halogen atoms, amino, cyano or the like, with methyl being preferred.

X which may be the same or different is a substituted or unsubstituted C₁-C₂₀ alkyl group, C₆-C₂₀ aryl group, C₁-C₂₀ alkoxy group or hydroxyl group, examples of which include, besides hydroxyl, methyl, ethyl, propyl, butyl, pentyl, hexyl, heptyl, octyl, nonyl, decyl, dodecyl, tetradecyl, hexadecyl, octadecyl; cyclopentyl, cyclohexyl, cycloheptyl; phenyl, tolyl, naphthyl; methoxy, ethoxy, propoxy, butoxy, hexyloxy, heptyloxy, octyloxy, decyloxy, and tetradecyloxy; or substituted forms of the foregoing groups in which some or all hydrogen atoms are substituted by halogen atoms, amino, cyano or the like.

Y which may be the same or different is X or -(O-X₂Si)_{c}-X.

The subscript a is an integer of 10 to 10,000, preferably an integer of 100 to 10,000, and more preferably 1,000 to 5,000. If a is less than 10, the resulting silicone rubber film becomes less flexible. If a is more than 10,000, the resulting film has reduced tear strength.

The subscript b is an integer of 0 to 1,000, preferably an integer of 0 to 200.

The subscript c is an integer of 0 to 1,000, preferably an integer of 0 to 200.

For curing, at least two hydroxyl groups must be contained per molecule, preferably 2 to 3 hydroxyl groups being contained.

Illustrative examples of the organopolysiloxane as component (A) are given below.

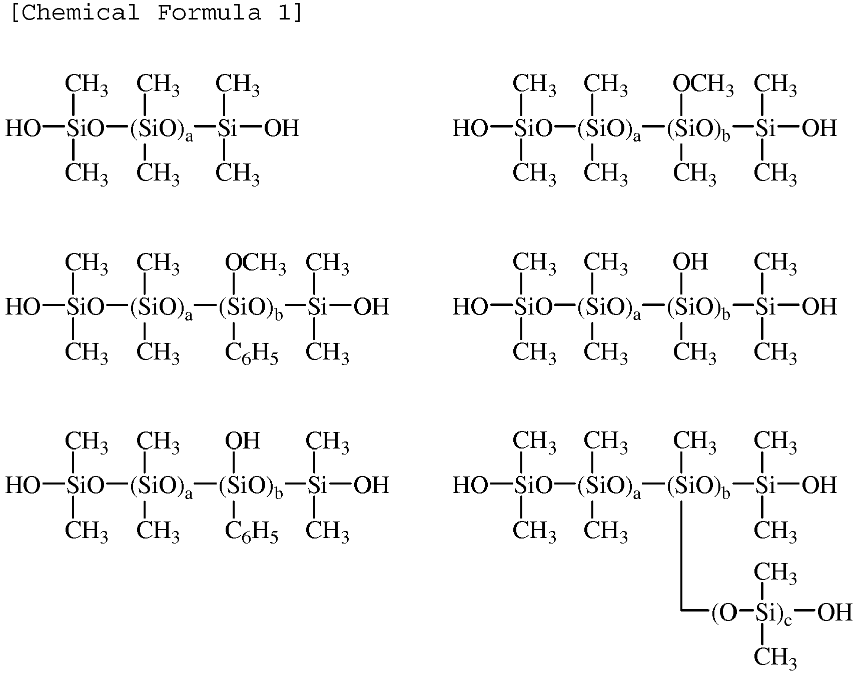

The organopolysiloxane (A) may be used alone or in combination of two or more.

The organopolysiloxane (A) may be synthesized by well-known techniques. For example, it may be obtained through equilibration reaction of a cyclic siloxane such as octamethylcyclotetrasiloxane, optionally along with an α,ω-dihydroxysiloxane oligomer, α,ω-dialkoxysiloxane oligomer or organoalkoxysilane in the presence of a catalyst such as an alkali metal hydroxide. It may also be obtained through dehydration or dealcoholization condensation between α,ω-dihydroxydimethylpolysiloxane and an organoalkoxysilane in the presence of a catalyst such as an alkali metal hydroxide.

Since the organopolysiloxane (A) is preferably used in the form of oil-in-water type emulsion, it may be prepared as an emulsion by a well-known emulsion polymerization technique. Thus, it may be readily synthesized by previously emulsifying and dispersing a cyclic siloxane, α,ω-dihydroxysiloxane oligomer, α,ω-dialkoxysiloxane oligomer, organoalkoxysilane or the like in water using an anionic or cationic surfactant, optionally adding a catalyst such as an acid or basic material, and effecting emulsion polymerization reaction.

In this case, the emulsion form of component (A) preferably has a solid concentration of 20 to 80% by weight, more preferably 30 to 70% by weight.

Component (B) is an organohydrogenpolysiloxane having at least two silicon-bonded hydrogen atoms per molecule, which serves as a crosslinker for the organopolysiloxane (A) in the presence of a bismuth compound as component (F) to improve the film strength. The preferred organohydrogenpolysiloxane has the general formula (2).

Z-(R₂SiO)_{d}-(RHSiO)ₑ-R₂Si-Z (2)

Herein R is as defined above, Z is hydrogen or R, d is an integer of 1 to 1,000, and e is an integer of 0 to 1,000, Z is hydrogen when e=0, and at least one Z is hydrogen when e=1.

In formula (2), d is an integer of 1 to 1,000, preferably an integer of 1 to 100, and e is an integer of 0 to 1,000, preferably an integer of 0 to 100, with the proviso that Z is hydrogen when e=0, and at least one Z is hydrogen when e=1.

The organohydrogenpolysiloxane as component (B) contains at least two, preferably 3 to 300, and more preferably 3 to 100 silicon-bonded hydrogen atoms (i.e., hydrosilyl groups (SiH groups)) per molecule. When the organohydrogenpolysiloxane (B) has a linear structure, these SiH groups may be present at the end of the molecular chain and/or at a position midway the molecular chain (i.e., at a non-terminal position of the molecular chain). The molecular structure of component (B) is not particularly limited and may contain a branched unit within its framework.

For component (B), the number of silicon atoms per molecule (or degree of polymerization) is preferably 2 to 300, more preferably 3 to 200, and even more preferably 4 to 150. Further component (B) is preferably liquid at room temperature (25°C) and preferably has a viscosity at 25°C of about 0.1 to about 1,000 mPa·s, more preferably about 0.5 to about 500 mPa·s.

Illustrative examples of the organohydrogenpolysilane are given below.

CH₃-[(CH₃)₂SiO]_{d}-[CH₃HSiO]ₑ-Si(CH₃)₃

H-SiO-[(CH₃)₂SiO]_{d}-[CH₃HSiO]ₑ-Si(CH₃)₂H

H-SiO-[(CH₃)₂SiO]_{d}-Si(CH₃)₂H

H-SiO-[(CH₃)₂SiO]_{d}-[CH₃HSiO]ₑ-Si(CH₃)₃

Herein d and e are as defined above.

The organohydrogenpolysiloxane (B) may be used alone or in combination of two or more.

Like the above-mentioned organopolysiloxane as component (A), the organohydrogenpolysiloxane may also be synthesized by any well-known techniques, such as equilibration reaction or emulsion polymerization between a cyclic siloxane having silicon-bonded hydrogen atoms and hexamethyldisiloxane or tetramethyldihydrogendisiloxane; or co-hydrolytic condensation of methyldichlorosilane, trimethylchlorosilane, dimethylchlorosilane and the like.

In the practice of the invention, the organohydrogenpolysiloxane (B) is preferably used in the form of oil-in-water type emulsion. The emulsion may be prepared by any well-known mechanical emulsifying techniques. Examples of the emulsifying machine used herein include a homomixer, homogenizer, colloid mill, and line mixer.

In this case, the emulsion form of component (B) preferably has a solid concentration of 20 to 80% by weight, more preferably 30 to 70% by weight.

The amount of component (B) added is 0.01 to 5 parts by weight, preferably 0.05 to 3 parts by weight, and more preferably 0.1 to 2 parts by weight per 100 parts by weight of component (A). If component (B) is less than 0.01 part, the composition cures insufficiently and the resulting rubber film has reduced tensile strength. If component (B) is more than 5 parts, the resulting film becomes too hard and less flexible.

Component (C) is the reaction product of an amino-containing organoalkoxysilane with an acid anhydride, which serves to improve the adhesion of a silicone film to the substrate. The reaction product is preferably obtained by reacting an amino-containing organoalkoxysilane with a dicarboxylic acid anhydride.

The amino-containing organoalkoxysilane as one reactant preferably has the general formula (3).

ASiR_{g}(OR)_{3-g} (3)

Herein R is as defined above, A is an amino-containing group of the formula: -R¹(NHR¹)ₕNHR² wherein R¹ which may be the same or different is a C₁-C₆ divalent hydrocarbon group, R² is R or hydrogen, and h is an integer of 0 to 6, and g is 0, 1 or 2.

R is as exemplified above for R in formula (1), with methyl and ethyl being preferred. Suitable C₁-C₆ divalent hydrocarbon groups represented by R¹ include alkylene groups such as methylene, ethylene, propylene, butylene, hexamethylene and octamethylene, and arylene groups such as phenylene, with ethylene and propylene being preferred.

Illustrative examples of the amino-containing organoalkoxysilane of formula (3) are given below.

(CH₃O)₃SiC₃H₆NHC₂H₄NH₂

(CH₃O)₂(CH₃)SiC₃H₆NHC₂H₄NH₂

(CH₃O)₃SiC₃H₆NH₂

(CH₃O)₂(CH₃)SiC₃H₆NH₂

(C₂H₅O)₃SiC₃H₆NH₂

(C₂H₅O)₂(CH₃)SiC₃H₆NH₂

Examples of the dicarboxylic anhydride to be reacted with the amino-containing organoalkoxysilane include maleic anhydride, phthalic anhydride, succinic anhydride, methylsuccinic anhydride, glutaric anhydride, and itaconic anhydride, with maleic anhydride being preferred.

The reaction can be performed simply by combining the amino-containing organoalkoxysilane with the acid anhydride in such amounts that a molar ratio of amino to acid anhydride is from 0.5 to 2, especially from 0.7 to 1.5, and mixing them optionally in a hydrophilic organic solvent, at room temperature (25°C) or an elevated temperature of 60 to 80°C for 1 to 5 hours. Suitable hydrophilic organic solvents include alcohols such as methanol, ethanol, isopropanol and butanol, ketones such as acetone and methyl ethyl ketone, acetonitrile, and tetrahydrofuran.

The amount of component (C) added is 1 to 10 parts by weight, preferably 2 to 5 parts by weight per 100 parts by weight of component (A). Less than 1 part of component (C) is less effective for adhesion to the substrate whereas more than 10 parts makes the film hard and brittle.

Component (D) is an epoxy-containing organoalkoxysilane and/or a partial hydrolytic condensate thereof, which serves to improve the adhesion of a silicone film to the substrate. Examples of the epoxy-containing organoalkoxysilane include γ-glycidoxypropyltrimethoxysilane, γ-glycidoxypropyldimethoxymethylsilane, β-(3,4-epoxycyclohexyl)ethyltrimethoxysilane, and β-(3,4-epoxycyclohexyl)ethyldimethoxymethylsilane.

The amount of component (D) added is 0.1 to 10 parts by weight, preferably 0.5 to 7 parts by weight, and more preferably 1 to 5 parts by weight per 100 parts by weight of component (A). Less than 0.1 part of component (D) is less effective for adhesion to the substrate whereas more than 10 parts makes the film hard, brittle, and less flexible.

Component (E) is colloidal silica, which is added as a film reinforcement. The colloidal silica may be used herein in the form of aqueous dispersion. The aqueous dispersion of colloidal silica which can be used herein is commercially available and its type is not particularly limited. For example, those colloidal silicas stabilized with sodium, ammonium or aluminum and having a particle size of 5 to 50 nm are useful. Suitable commercial examples include Snowtex (Nissan Chemical Industries, Ltd.), Ludox (W. R. Grace & Co.), Silicadol (Nippon Chemical Industrial Co., Ltd.), Adelite AT (Adeka Corp.), and Cataloid S (Catalysts & Chemicals Industries Co., Ltd.).

The amount of the colloidal silica added is 0.5 to 50 parts by weight, preferably 1 to 30 parts by weight (calculated as solids) per 100 parts by weight of component (A). Less than 0.5 part of colloidal silica fails to improve the strength of the film whereas more than 50 parts makes the film hard and brittle, leading to poor elongation.

Component (F) is a bismuth compound which is an essential component for the inventive composition and serves as a curing catalyst for inducing condensation reaction to the composition for crosslinking and curing. The bismuth compound (F) is not particularly limited as long as it is a catalyst for condensation reaction of components (A) and (B). Organobismuth compounds are preferred, and bismuth carboxylates are more preferred. Of these, straight or branched carboxylates of trivalent bismuth are preferred. More preferred are bismuth compounds having the general formula (4).

(R³CO₂)(R⁴CO₂)(R⁵CO₂)Bi (4)

Herein R³, R⁴ and R⁵ which may be the same or different are substituted or unsubstituted C₁-C₂₀, preferably C₁-C₁₀ monovalent hydrocarbon groups.

Suitable substituted or unsubstituted C₁-C₂₀, preferably C₁-C₁₀ monovalent hydrocarbon groups represented by R³, R⁴ and R⁵ include alkyl groups such as methyl, ethyl, propyl, isopropyl, butyl, isobutyl, tert-butyl, pentyl, neopentyl, hexyl, and octyl, cycloalkyl groups such as cyclohexyl, alkenyl groups such as vinyl, allyl and propenyl, aryl groups such as phenyl, tolyl, xylyl and naphthyl, and aralkyl groups such as benzyl, phenylethyl and phenylpropyl, or substituted forms of the foregoing groups in which some or all hydrogen atoms are substituted by halogen atoms (e.g., fluorine, bromine and chlorine), cyano or the like, such as chloromethyl, chloropropyl, bromoethyl, trifloropropyl, and cyanoethyl. Of these, a straight or branched alkyl is preferred.

Inter alia, salts of trivalent bismuth with straight or branched alkylcarboxylic acids are most preferred because the compositions comprising the same are highly curable.

Illustrative examples of the bismuth compound are given below.

(CH₃CO₂)₃Bi, (C₂H₅CO₂)₃Bi, (C₇H₁₅CO₂)₃Bi,

(C₈H₁₇CO₂)₃Bi, (C₉H₁₉CO₂)₃Bi, (C₃H₇CO₂)₃Bi,

(C₄H₉CO₂)₃Bi, (C₅H₁₁CO₂)₃Bi,

(C₆H₁₃CO₂)₃Bi, (CH₃CO₂)(C₇H₁₅CO₂)₂Bi,

(C₇H₁₅CO₂)(C₉H₁₉CO₂)₂Bi

Except for those bismuth compounds which are water soluble, desirably the bismuth compounds are previously converted to emulsion form by emulsifying and dispersing them in water using a surfactant.

The amount of component (F) added is 0.1 to 10 parts by weight, preferably 1 to 5 parts by weight per 100 parts by weight of component (A). If the amount of component (F) is less than 0.1 part, the composition cures insufficiently and the resulting film has reduced strength. If the amount is more than 10 parts, the catalyst component remaining in the film as nonvolatile impairs the film properties.

The surfactant used for converting each component to the emulsion form is not particularly limited. Examples include nonionic surfactants such as polyoxyethylene alkyl ethers, polyoxyethylene alkyl phenyl ethers, and polyoxyethylene fatty acid esters; anionic surfactants such as alkylsulfate salts, alkylbenzenesulfonate salts and alkylphosphate salts; cationic surfactants such as quaternary ammonium salts and alkylamine acetate salts; ampholytic surfactants such as alkylbetains and alkylimidazolines; and water-soluble polymers such as polyvinyl alcohol.

Water (G) is compounded in the curable silicone emulsion composition. The amount of water used is 50 to 500 parts by weight, preferably 100 to 200 parts by weight per 100 parts by weight of component (A).

The curable silicone emulsion composition may be prepared by conventional well-known emulsion polymerization and phase inversion emulsification techniques. The emulsifying machine is not particularly limited. Examples of the emulsifying machine used include a homomixer, homogenizer, colloid mill, universal mixer, combi-mixer, and line mixer.

The resulting curable silicone emulsion composition preferably has a solid concentration of 30 to 70% by weight, more preferably 40 to 60% by weight.

To the composition, other components typically added for textile treating agents or aqueous paints may be compounded if desired, such as, for example, thickeners, defoamers, pigments, inorganic powder, penetrants, antistatic agents, and preservatives.

The method of applying the inventive composition is not particularly limited. The composition may be applied by any well-known techniques including brush coating, roll coating, spraying, knife coating, and dipping. For improving the efficiency of coating operation, a thickener or the like may be added to the composition to adjust the liquid viscosity thereof. Suitable thickeners include carboxymethyl cellulose, sodium polyacrylate, starch, casein, cellulose acetate, hydroxyethyl cellulose, and polyvinyl alcohol.

The composition is then dried at room temperature whereby it cures into a rubber film. Optional heating to promote cure is effective for reducing the treatment time.

The composition is widely applicable as binders for inorganic or organic materials, textile treating agents, paints, parting agents, and back coating agents for pressure-sensitive adhesive sheets.

### EXAMPLES

Preparation Examples, Examples and Comparative Examples are given below by way of illustration and not by way of limitation. In Examples, percent are by weight unless otherwise stated.

### [Preparation Example 1]

A 2-L polyethylene beaker was charged with 498 g of octamethylcyclotetrasiloxane, 2 g of triethoxyphenylsilane, 50 g of 10% sodium laurylsulfate aqueous solution and 50 g of 10% dodecylbenzenesulfonate aqueous solution, which were homogeneously emulsified using a homomixer. Water, 400 g, was slowly added for dilution, and the diluted liquid passed twice through a high-pressure homogenizer under a pressure of 30 MPa, yielding a homogeneous white emulsion. This emulsion was transferred to a 2-L glass flask equipped with a stirrer, thermometer and reflux condenser, where it was subjected to polymerization reaction at 50°C for 24 hours and aged at 110°C for 24 hours. This was followed by neutralization to pH 6.2 with 12 g of 10% sodium carbonate aqueous solution. The emulsion thus obtained had a nonvolatile content of 45.4% upon drying at 105°C for 3 hours, and contained a soft gel-like organopolysiloxane end-capped with hydroxyl groups having the average compositional formula:

HO-[(CH₃)₂SiO]₃₀₀₀-[C₆H₅HOSiO]₄-Si(CH₃)₂-OH

on instrumental analyses including NMR, GPC, and IR. This organopolysiloxane had a weight average molecular weight (Mw) of about 1,200,000 as measured by GPC. In this way, an emulsion [A-1] containing organopolysiloxane as component (A) was obtained.

### [Preparation Example 2]

A 2-L polyethylene beaker was charged with 500 g of octamethylcyclotetrasiloxane, 50 g of 10% sodium laurylsulfate aqueous solution and 50 g of 10% dodecylbenzenesulfonate aqueous solution, which were homogeneously emulsified using a homomixer. Water, 400 g, was slowly added for dilution, and the diluted liquid passed twice through a high-pressure homogenizer under a pressure of 30 MPa, yielding a homogeneous white emulsion. This emulsion was transferred to a 2-L glass flask equipped with a stirrer, thermometer and reflux condenser, where it was subjected to polymerization reaction at 50°C for 24 hours and aged at 10°C for 24 hours. This was followed by neutralization to pH 6.2 with 12 g of 10% sodium carbonate aqueous solution. The emulsion thus obtained had a nonvolatile content of 45.5% upon drying at 105°C for 3 hours, and contained a gum-like organopolysiloxane with a viscosity of 2,000,000 mPa·s having the average compositional formula:

HO-[(CH₃)₂SiO]₃₀₀₀-H

on instrumental analyses including NMR, GPC, and IR. This organopolysiloxane had a weight average molecular weight (Mw) of about 300,000 as measured by GPC. In this way, an emulsion [A-2] containing organopolysiloxane as component (A) was obtained.

### [Preparation Example 3]

A 1-L glass flask equipped with a stirrer, thermometer and reflux condenser was charged with 600 g of tetramethylcyclotetrasiloxane, 32.4 g of hexamethyldisiloxane, and 12.6 g of sulfuric acid, which was subjected to equilibration reaction at room temperature for 12 hours.

This was followed by neutralization with 21.6 g of sodium hydrogencarbonate. The resulting organopolysiloxane had the average compositional formula:

CH₃-[(CH₃)₂SiO]-[(CH₃)HSiO]₅₀-Si(CH₃)₃

on instrumental analyses including GPC, IR and NMR.

A 2-L polyethylene beaker was charged with 600 g of the resulting organohydrogenpolysiloxane and 15 g of polyoxyethylene alkyl ether (Emulgen 1108, Kao Corp.), which were homogeneously mixed using a homomixer. Water, 370 g, was slowly added for achieving emulsification and dispersion in water, and the dispersion passed twice through a high-pressure homogenizer under a pressure of 30 MPa, yielding a stable emulsion [B] containing organohydrogenpolysiloxane as component (B).

The emulsion had a nonvolatile content of 59.9% upon drying at 105°C for 3 hours.

### [Preparation Example 4]

Maleic anhydride, 154 g, was dissolved in 500 g of ethanol, after which 346 g of 3-aminopropyltriethoxysilane was added dropwise at room temperature over one hour. Reaction was performed under ethanol reflux at 80°C for 24 hours, yielding a pale yellow clear solution [C] containing 50% of component (C). This solution had a nonvolatile content of 45.1% upon drying at 105°C for 3 hours. On instrumental analyses including IR, GC, NMR and GCMS, the reaction product in the solution consisted of about 60% of a mixture of (C₂H₅O)₃SiC₃H₆-NHCO-CH=CHCOOH and (C₂H₅O)₃SiC₃H₆-NH₃^{+ -}OCOCH=CHCOOC₂H₅ and the remainder (about 40%) of oligomers derived therefrom.

### [Preparation Example 5]

A 2-L polyethylene beaker was charged with 350 g of bismuth trioctoate (Neostann U-600, Nitto Kasei Co., Ltd., active ingredient 57%) and 50 g of polyoxyethylene alkyl ether (Emulgen 1108, Kao Corp.), which were homogeneously mixed using a homomixer. Water, 600 g, was slowly added for achieving emulsification and dispersion in water, and the dispersion passed twice through a high-pressure homogenizer under a pressure of 40 MPa, yielding a stable emulsion [F] containing the bismuth compound as component (F). The emulsion had a nonvolatile content of 15.0% upon drying at 105°C for 3 hours.

### [Preparation Example 6]

A 2-L polyethylene beaker was charged with 350 g of dioctyltin dilaurate (Neostann U-810, Nitto Kasei Co., Ltd., active ingredient 99%) and 50 g of polyoxyethylene alkyl ether (Emulgen 1108, Kao Corp.), which were homogeneously mixed using a homomixer. Water, 600 g, was slowly added for achieving emulsification and dispersion in water, and the dispersion passed twice through a high-pressure homogenizer under a pressure of 40 MPa, yielding a stable emulsion [H] containing the organotin compound. The emulsion had a nonvolatile content of 39.5% upon drying at 105°C for 3 hours.

### [Examples 1 to 4 and Comparative Examples 1 to 3]

According to the mixing formulations shown in Table 1, silicone emulsion compositions (nonvolatile content 40%) were prepared by mixing emulsion [A-1] or [A-2] containing component (A), emulsion [B] containing component (B), solution [C] containing component (C), emulsion [F] containing component (F), emulsion [H] containing the organotin compound, obtained above in Preparation Examples, γ-glycidoxypropyltrimethoxysilane [D] as component (D), and colloidal silica [E] (Snowtex C, Nissan Chemical Industry Co., Ltd., active ingredient 20%) as component (E).

### <Evaluation of film physical properties>

The above silicone emulsion composition, 20 g, was cast in a polypropylene resin disposable tray (150 mm × 105 mm × 19 mm), held in an atmosphere at a temperature 25°C and RH 60% for 48 hours, and then heated at 105°C for 1 hour, yielding a cured film of about 1 mm thick. The film was measured for hardness, tensile strength, and elongation according to JIS K-6249, with the results shown in Table 1.

**[Table 1]**

| Formulation, parts by weight | | Example | | | | Comparative Example | | |
|---|---|---|---|---|---|---|---|---|
| | | 1 | 2 | 3 | 4 | 1 | 2 | 3 |
| Component (A) | [A-1] | 100 | 100 | 100 | | 100 | 100 | 100 |
| | [A-2] | | | | 100 | | | |
| Component (B) | [B] | 0.3 | 1 | 2 | 2 | 0.3 | 2 | 1 |
| Component (C) | [C] | 3 | 3 | 3 | 3 | 3 | | 3 |
| Component (D) | [D] | 1 | 1 | 1 | 1 | 1 | | 1 |
| Component (E) | [E] | 30 | 30 | 30 | 30 | 30 | | 30 |
| Component (F) | [F] | 3 | 3 | 3 | 3 | 0 | 3 | |
| Component (H) | [H] | | | | | | | 2 |
| Film physical properties | Hardness | 21 | 22 | 25 | 17 | 5 | 8 | 25 |
| | Tensile strength, MPa | 2.0 | 2.1 | 2.2 | 1.7 | 0.6 | 0.6 | 2.5 |
| | Elongation, % | 1,000 | 1,000 | 800 | 1,100 | 500 | 700 | 1,100 |

## Claims

1. A curable silicone emulsion composition comprising
(A) 100 parts by weight of an organopolysiloxane containing at least two silicon-bonded hydroxyl groups per molecule,
(B) 0.01 to 5 parts by weight of an organohydrogenpolysiloxane containing at least two silicon-bonded hydrogen atoms per molecule,
(C) 1 to 10 parts by weight of a reaction product of an amino-containing organoalkoxysilane with an acid anhydride,
(D) 0.1 to 10 parts by weight of an epoxy-containing organoalkoxysilane and/or partial hydrolytic condensate thereof,
(E) 0.5 to 50 parts by weight of colloidal silica,
(F) 0.1 to 10 parts by weight of a bismuth compound, and
(G) 50 to 500 parts by weight of water.

2. The curable silicone emulsion composition of claim 1 wherein the organopolysiloxane (A) has the general formula (1) :
X₃SiO-(R₂SiO)ₐ-(Y₂SiO)_{b}-SiX₃ (1)
wherein R which may be the same or different is a substituted or unsubstituted C₁-C₂₀ alkyl group or C₆-C₂₀ aryl group, X which may be the same or different is a substituted or unsubstituted C₁-C₂₀ alkyl group, C₆-C₂₀ aryl group, C₁-C₂₀ alkoxy group or hydroxyl group, Y which may be the same or different is X or -(O-X₂Si)_{c}-X, a is an integer of 10 to 10,000, b is an integer of 0 to 1,000, and c is an integer of 0 to 1,000, with the proviso that X, Y, b and c are selected such that at least two silicon-bonded hydroxyl groups are contained per molecule.

3. The curable silicone emulsion composition of claim 1 or 2 wherein the organopolysiloxane (A) is used in the form of an oil-in-water type emulsion having a solid concentration of 20 to 80% by weight.

4. The curable silicone emulsion composition of any one of claims 1 to 3 wherein the organohydrogenpolysiloxane (B) has the general formula (2):
Z-(R₂SiO)_{d}-(RHSiO)ₑ-R₂Si-Z (2)
wherein R which may be the same or different is a substituted or unsubstituted C₁-C₂₀ alkyl group or C₆-C₂₀ aryl group, Z is hydrogen or R, d is an integer of 1 to 1,000, and e is an integer of 0 to 1,000, Z is hydrogen when e=0, and at least one Z is hydrogen when e=1.

5. The curable silicone emulsion composition of any one of claims 1 to 4 wherein component (C) is a reaction product of an amino-containing organoalkoxysilane having the general formula (3):
ASiR_{g}(OR)_{3-g} (3)
wherein R which may be the same or different is a substituted or unsubstituted C₁-C₂₀ alkyl group or C₆-C₂₀ aryl group, A is an amino-containing group of the formula: -R¹(NHR¹)ₕNHR² wherein R¹ which may be the same or different is a C₁-C₆ divalent hydrocarbon group, R² is R or hydrogen, and h is an integer of 0 to 6, and g is 0, 1 or 2, with an acid anhydride selected from the group consisting of maleic anhydride, phthalic anhydride, succinic anhydride, methylsuccinic anhydride, glutaric anhydride, and itaconic anhydride.

6. The curable silicone emulsion composition of any one of claims 1 to 5 wherein component (F) is a straight or branched carboxylate of trivalent bismuth.

7. The curable silicone emulsion composition of any one of claims 1 to 5 wherein component (F) has the general formula (4) :
(R³CO₂)(R⁴CO₂)(R⁵CO₂)Bi (4)
wherein R³, R⁴ and R⁵ which may be the same or different are substituted or unsubstituted C₁-C₂₀ monovalent hydrocarbon groups.

8. The curable silicone emulsion composition of any one of claims 1 to 7 wherein the organohydrogenpolysiloxane (B) contains 3 to 300 silicon-bonded hydrogen atoms per molecule.

9. The curable silicone emulsion composition of any one of claims 1 to 8 wherein the organohydrogenpolysiloxane (B) is used in the form of an oil-in-water type emulsion having a solid concentration of 20 to 80% by weight.

10. The curable silicone emulsion composition of any one of claims 1 to 9 wherein the colloidal silica (E) is stabilized with sodium, ammonium or aluminum, and has a particle size of 5 to 50 nm.

11. The curable silicone emulsion composition of any one of claims 1 to 10 wherein the curable silicone emulsion composition has a solid concentration of 30 to 70% by weight.

## Patentansprüche

1. Härtbare Siliconemulsionszusammensetzung, umfassend
(A) 100 Gewichtsteile eines Organopolysiloxans, das zumindest zwei siliciumgebundene Hydroxylgruppen pro Molekül enthält,
(B) 0,01 bis 5 Gewichtsteile eines Organohydrogenpolysiloxans, das zumindest zwei siliciumgebundene Wasserstoffatome pro Molekül enthält,
(C) 1 bis 10 Gewichtsteile eines Reaktionsprodukts eines aminohältigen Organoalkoxysilans mit einem Säureanhydrid,
(D) 0,1 bis 10 Gewichtsteile eines epoxidhältigen Organoalkoxysilans und/oder teilhydrolytischen Kondensats davon,
(E) 0,5 bis 50 Gewichtsteile Kieselsol,
(F) 0,1 bis 10 Gewichtsteile einer Bismut-Verbindung und
(G) 50 bis 500 Gewichtsteile Wasser.

2. Härtbare Siliconemulsionszusammensetzung nach Anspruch 1, wobei das Organopolysiloxan (A) die allgemeine Formel (1) aufweist:
X₃SiO-(R₂SiO)ₐ-(Y₂SiO)_{b}-SiX₃ (1)
worin R, das gleich oder verschieden sein kann, eine substituierte oder unsubstituierte C₁-C₂₀-Alkylgruppe oder eine C₆-C₂₀-Arylgruppe ist, X, das gleich oder verschieden sein kann, eine substituierte oder unsubstituierte C₁-C₂₀-Alkylgruppe, C₆-C₂₀-Arylgruppe, C₁-C₂₀-Alkoxygruppe oder Hydroxylgruppe ist, Y, das gleich oder verschieden sein kann, X oder -(O-X₂Si)_{c}-X ist, a eine ganze Zahl von 10 bis 10.000 ist, b eine ganze Zahl von 0 bis 1000 ist und c eine ganze Zahl von 0 bis 1000 ist, mit der Maßgabe, dass X, Y, b und c so ausgewählt sind, dass zumindest zwei siliciumgebundene Hydroxylgruppen pro Molekül enthalten sind.

3. Härtbare Siliconemulsionszusammensetzung nach Anspruch 1 oder 2, wobei das Organopolysiloxan (A) in Form einer Öl-in-Wasser-Emulsion mit einer Feststoffkonzentration von 20 bis 80 Gew.-% verwendet wird.

4. Härtbare Siliconemulsionszusammensetzung nach einem der Ansprüche 1 bis 3, wobei das Organohydrogenpolysiloxan (B) die allgemeine Formel (2) aufweist:
Z-(R₂SiO)_{d}-(RHSiO)ₑ-R₂Si-Z (2)
worin R, das gleich oder verschieden sein kann, eine substituierte oder unsubstituierte C₁-C₂₀-Alkylgruppe oder C₆-C₂₀-Arylgruppe ist, Z Wasserstoff oder R ist, d eine ganze Zahl von 1 bis 1000 ist und e eine ganze Zahl von 0 bis 1000 ist, Z Wasserstoff ist, wenn e = 0 ist, und zumindest ein Z Wasserstoff ist, wenn e = 1 ist.

5. Härtbare Siliconemulsionszusammensetzung nach einem der Ansprüche 1 bis 4, wobei Komponente (C) ein Reaktionsprodukt eines aminohältigen Organoalkoxysiloxans mit der allgemeinen Formel (3):
ASiR_{g}(OR)_{3-g} (3)
worin R, das gleich oder verschieden sein kann, eine substituierte oder unsubstituierte C₁-C₂₀-Alkylgruppe oder eine C₆-C₂₀-Arylgruppe ist, A eine aminohältige Gruppe der Formel: -R¹(NHR¹)ₕNHR² ist, worin R¹, das gleich oder verschieden sein kann, eine zweiwertige C₁-C₆-Kohlenwasserstoffgruppe ist, R² R oder Wasserstoff ist und h eine ganze Zahl von 0 bis 6 ist und g 0, 1 oder 2 ist, mit einem Säureanhydrid ist, das aus der aus Maleinsäureanhydrid, Phthalsäureanhydrid, Bernsteinsäureanhydrid, Methylbernsteinsäureanhydrid, Glutarsäureanhydrid und Itaconsäureanhydrid bestehenden Gruppe ausgewählt ist.

6. Härtbare Siliconemulsionszusammensetzung nach einem der Ansprüche 1 bis 5, wobei Komponente (F) ein unverzweigtes oder verzweigtes Carboxylat von dreiwertigem Bismut ist.

7. Härtbare Siliconemulsionszusammensetzung nach einem der Ansprüche 1 bis 5, wobei Komponente (F) die allgemeine Formel (4) aufweist:
(R³CO₂)(R⁴CO₂)(R⁵CO₂)Bi (4)
worin R³, R⁴ und R⁵, die gleich oder verschieden sein können, substituierte oder unsubstituierte einwertige C₁-C₂₀-Kohlenwasserstoffgruppen sind.

8. Härtbare Siliconemulsionszusammensetzung nach einem der Ansprüche 1 bis 7, wobei das Organohydrogenpolysiloxan (B) 3 bis 300 siliciumgebundene Wasserstoffatome pro Molekül enthält.

9. Härtbare Siliconemulsionszusammensetzung nach einem der Ansprüche 1 bis 8, wobei das Organohydrogenpolysiloxan (B) in Form einer Öl-in-Wasser-Emulsion mit einer Feststoffkonzentration von 20 bis 80 Gew.-% verwendet wird.

10. Härtbare Siliconemulsionszusammensetzung nach einem der Ansprüche 1 bis 9, wobei das Kieselsol (E) mit Natrium, Ammonium oder Aluminium stabilisiert ist und eine Teilchengröße von 5 bis 50 nm aufweist.

11. Härtbare Siliconemulsionszusammensetzung nach einem der Ansprüche 1 bis 10, wobei die härtbare Siliconemulsionszusammensetzung eine Feststoffkonzentration von 30 bis 70 Gew.-% aufweist.

## Revendications

1. Composition en émulsion de silicone durcissable comprenant
(A) 100 parties en poids d'un organopolysiloxane contenant au moins deux groupes hydroxyle liés au silicium par molécule,
(B) 0,01 à 5 parties en poids d'un organohydrogénopolysiloxane contenant au moins deux atomes d'hydrogène liés au silicium par molécule,
(C) 1 à 10 parties en poids d'un produit de la réaction d'un organoalcoxysilane contenant un radical amino avec un anhydride d'acide,
(D) 0,1 à 10 parties en poids d'un organoalcoxysilane contenant un radical époxy et/ou d'un condensat hydrolytique partiel de celui-ci,
(E) 0,5 à 50 parties en poids de silice colloïdale,
(F) 0,1 à 10 parties en poids d'un composé du bismuth, et
(G) 50 à 500 parties en poids d'eau.

2. Composition en émulsion de silicone durcissable selon la revendication 1, dans laquelle l'organopolysiloxane (A) répond à la formule générale (1) :
X₃SiO-(R₂SiO)ₐ-(Y₂SiO)_{b}-SiX₃ (1)
dans laquelle chacun des R, qui peuvent être identiques ou différents, est un groupe alkyle en C₁ à C₂₀ ou un groupe aryle en C₆ à C₂₀, substitué ou non substitué, chacun des X, qui peuvent être identiques ou différents, est un groupe alkyle en C₁ à C₂₀, un groupe aryle en C₆ à C₂₀, un groupe alcoxy en C₁ à C₂₀ ou un groupe hydroxyle, substitué ou non substitué, chacun des Y, qui peuvent être identiques ou différents, est X ou -(0-X₂Si)ₓ-X, a est un entier de 10 à 10 000, b est un entier de 0 à 1 000, et c est un entier de 0 à 1 000, sous réserve que X, Y, b et c soient choisis de façon qu'au moins deux groupes hydroxyle liés au silicium soient contenus par molécule.

3. Composition en émulsion de silicone durcissable selon la revendication 1 ou 2, dans laquelle l'organopolysiloxane (A) est utilisé sous la forme d'une émulsion du type huile dans l'eau ayant une concentration de solides de 20 à 80 % en poids.

4. Composition en émulsion de silicone durcissable selon l'une quelconque des revendications 1 à 3, dans laquelle l'organohydrogénopolysiloxane (B) répond à la formule générale (2) :
Z-(R₂SiO)_{d}-(RHSiO)ₑ-R₂Si-Z (2)
dans laquelle chacun des R, qui peuvent être identiques ou différents, est un groupe alkyle en C₁ à C₂₀ ou un groupe aryle en C₆ à C₂₀, substitué ou non substitué, Z est l'hydrogène ou R, d est un entier de 1 à 1 000, et e est un entier de 0 à 1 000, Z est l'hydrogène quand e = 0, et au moins un Z est l'hydrogène quand e = 1.

5. Composition en émulsion de silicone durcissable selon l'une quelconque des revendications 1 à 4, dans laquelle le composant (C) est un produit de la réaction d'un organoalcoxysilane contenant un radical amino de formule générale (3) :
ASiR_{g}(OR)_{3-g} (3)
dans laquelle chacun des R, qui peuvent être identiques ou différents, est un groupe alkyle en C₁ à C₂₀ ou un groupe aryle en C₆ à C₂₀, substitué ou non substitué, A est un groupe contenant un radical amino de formule -R¹(NHR¹)ₕNHR² dans laquelle chacun des R¹, qui peuvent être identiques ou différents, est un groupe hydrocarboné divalent en C₁ à C₆, R² est R ou l'hydrogène, et h est un entier de 0 à 6, et g vaut 0, 1 ou 2, avec un anhydride d'acide choisi dans l'ensemble constitué par l'anhydride maléique, l'anhydride phtalique, l'anhydride succinique, l'anhydride méthylsuccinique, l'anhydride glutarique, et l'anhydride itaconique.

6. Composition en émulsion de silicone durcissable selon l'une quelconque des revendications 1 à 5, dans laquelle le composant (F) est un carboxylate linéaire ou ramifié de bismuth trivalent.

7. Composition en émulsion de silicone durcissable selon l'une quelconque des revendications 1 à 5, dans laquelle le composant (F) répond à la formule générale (4) :
(R³CO₂)(R⁴CO₂)(R⁵CO₂)Bi (4)
dans laquelle R³, R⁴ et R⁵, qui peuvent être identiques ou différents, sont des groupes hydrocarbonés monovalents en C₁ à C₂₀ substitués ou non substitués.

8. Composition en émulsion de silicone durcissable selon l'une quelconque des revendications 1 à 7, dans laquelle l'organohydrogénopolysiloxane (B) contient 3 à 300 atomes d'hydrogène liés au silicium par molécule.

9. Composition en émulsion de silicone durcissable selon l'une quelconque des revendications 1 à 8, dans laquelle l'organohydrogénopolysiloxane (B) est utilisé sous la forme d'une émulsion de type huile dans l'eau ayant une concentration de solides de 20 à 80 % en poids.

10. Composition en émulsion de silicone durcissable selon l'une quelconque des revendications 1 à 9, dans laquelle la silice colloïdale (E) est stabilisée avec du sodium, de l'ammonium ou de l'aluminium, et a une granulométrie de 5 à 50 nm.

11. Composition en émulsion de silicone durcissable selon l'une quelconque des revendications 1 à 10, laquelle composition en émulsion de silicone durcissable a une concentration de solides de 30 à 70 % en poids.
